(19) Europäisches Patentamt

European Patent Office

Office européen des brevets

(11) Publication number: **0 387 223 B1**

# EUROPEAN PATENT SPECIFICATION

(45) Date of publication of patent specification: **21.06.95** (51) Int. Cl.6: **B23K 9/09**

(21) Application number: **90850088.7**

(22) Date of filing: **02.03.90**

(54) **Method for pulsed arc welding.**

(30) Priority: **06.03.89 SE 8900758**

(43) Date of publication of application:
**12.09.90 Bulletin 90/37**

(45) Publication of the grant of the patent:
**21.06.95 Bulletin 95/25**

(84) Designated Contracting States:
**AT BE CH DE DK ES FR GB IT LI LU NL**

(56) References cited:
| | |
|---|---|
| GB-A- 2 075 773 | US-A- 3 978 311 |
| US-A- 4 301 355 | US-A- 4 409 465 |
| US-A- 4 438 317 | US-A- 4 584 458 |
| US-A- 4 620 082 | US-A- 4 758 707 |

PATENT ABSTRACTS OF JAPAN; vol.7, No. 163 (M-238) 23rd April 1983; JP-A-58 68473 (HITASHI)

PATENT ABSTRACTS OF JAPAN,vol. 7, No. 193 (M-238), 3rd June 1983; JP-A-58 93574 (OSAKA HENATSUKI)

PATENT ABSTRACTS OF JAPAN; vol.11, No. 82 (M-271) 23rd October 1986; JP-A-61 238470 (HITACHI)

(73) Proprietor: **ESAB Aktiebolag
Box 8004
Herkulesgatan 72
S-402 77 Göteborg (SE)**

(72) Inventor: **Westerlund, Lars
Järnvägsgatan 1
S-695 OO Laxa (SE)**

(74) Representative: **Frisch, Kurt
c/o ESAB AB
Box 8004
S-402 77 Göteborg (SE)**

## Description

The invention relates to a method for pulsed arc welding with an electrode which is continuously fed at a given feed speed to a welding point, in which there are caused to flow alternately a basic current during a basic time and a pulse current during a pulse time, nominal values of the basic time, the basic current, the pulse time and the pulse current being selected according to a predetermined relationship depending upon the composition of the protective atmosphere and the material and size of the electrode as well as the basic time and the basic current additionally depending upon the feed speed of the electrode, wherein the arc voltage is measured during the pulse time and is compared with a stipulated reference voltage corresponding to a given length of electric arc, a voltage difference between the arc voltage and the reference voltage is formed and wherein the basic time is calculated so that the basic time is extended in the case of a positive value of the voltage difference or respectively shortened in the case of a negative value of the said voltage difference the basic current being reduced in the case of an extension of the basic time so that the quantity of material fused per unit of time at the end of the electrode during the extended basic time is smaller than the quantity of electrode fed per unit of time and the basic current being increased in the case of shortening of the basic time so that the quantity of material fused per unit of time at the end of the electrode during the shortened basic time is greater than the quantity of electrode fed per unit of time.

In known pulsed arc welding procedures the current is varied with a given pulse frequency between a basic current and a pulse current. The material transport from the electrode to the workpiece takes place either in spray form, that is to say in the form of a quantity of small drops, or in globular form, that is to say larger drops or simply in the form of one single drop per pulse. In many cases, a reduction in the mean value of the welding current is sought in order to limit the heating up of the workpiece during the welding. This reduction is obtained by selection of a globular material transfer and in particular a material transfer with one drop per pulse. During the basic time, a given quantity of material is fused at the end of the electrode and during the pulse time the fused material is then cut off by the pinching force which at the same time accelerates the material in the direction to the workpiece. The drop which is cut off is thrown towards the welding pool and causes spattering if the pinching force is not adapted to the size of the drop and the length of the electric arc. Since the pinching force is proportional to the square of the current, the current must be adjusted in order to keep the pinching force and thus the movement of the drop to the welding bath under control. Additionally, the drop must not form a short-circuiting bridge between the electrode and the welding point which would lead to a great increase in current.

In order to minimize the spatter losses, it is advantageous in pulsed arc welding to apply current pulsation and not voltage pulsation. In the case of voltage pulsation between a basic voltage, during which the electric arc is maintained, and a voltage pulse, during which the material transfer to the welding pool is initiated, the current cannot be controlled, since the voltage drop in cables, the nozzle of the welding gun etc. cannot be anticipated with sufficient accuracy. In the case of voltage pulsation, however, self-regulation of the length of the electric arc is obtained since, for pulsed arc welding procedures, current sources with a characteristic which drops slightly are usually used, that is to say a voltage drop under load of approximately 2V to 5V/100A. If for any reason the length of the electric arc is changed, such a current source responds immediately with a corresponding change in current which restores the original arc length. In the case of current pulsation, this self-regulating effect is absent.

In US 4,409,465 a pulsed arc welding method is disclosed wherein the transfer of material from the electrode to the welding pool takes place in spray form at specified pulse current levels above a critical level. The control of the arc voltage during the pulse time is based on an average value of the pulse current.

US 4,620,082 discloses a pulsed arc welding system having means for detecting the arc voltage and for generating an arc voltage signal. This signal is provided to generate a pulse control signal which is utilized to control the frequency of the pulsed welding current.

It is the aim of the present invention to provide a method for eliminating substantially the formation of spatter by regulating the length of the arc in current-pulsed gas-shielded arc welding. The invention is characterized in that the welding material is transferred from the electrode to the welding point in one single non-short-circuiting drop per pulse, in that the pulse time and the pulse current are kept essentially constant and the arc voltage is measured during the pulse time on a number of occasions when the pulse current is essentially constant and that from measured values a mean value of the arc voltage is calculated and the voltage difference is formed between the said mean value and the reference voltage, whereupon the basic time and the basic current, which applied immediately before the pulse are changed to the calculated values to apply immediately after the pulse.

The quantity of electrode supplied per unit of time to the welding point is a function of the feed speed and therefore constant. The energy supplied during the basic time to the end of the electrode and the electric arc is decisive for the quantity of material which is fused at the end of the electrode. The pinching force then cuts off, during the pulse time, a drop whose size is dependent upon the above-mentioned energy during the basic time.

If for any reason the arc has become too long, the fusion of the material must be delayed slightly. In view of the spatter losses, the size of the drop may, however, only vary within certain limits and the energy during the basic time must be adapted to the changed circumstances. In the case of an arc which is too long, the basic time must be extended so that a greater length of electrode can be fed, but at the same time the current must be reduced so that the fusion speed, that is to say the fusion per unit of time, becomes lower than the feed speed of the electrode. The fusion speed must not, however, be less than 70% of the electrode speed. In the case of values which are lower still, the quantity of electrode fused during the basic time becomes too small and there is a risk that cutting off cannot be completed during the subsequent pulse time. The whole pulsed arc welding sequence is then upset.

If the arc has become too short, the fusion speed must be made greater than the feed speed. It must not, however, be greater than 140%. In the case of higher values, the quantity of material fused becomes too great. This leads to very large drops, the cutting off of which can be unsuccessful with unacceptable spatter losses or an undesirable drop short-circuiting as a result.

During the pulse time, the pulse current increases rapidly from its basic value to its pulse value. After a transient response which is usually of short duration, the pulse current is constant apart from small fluctuations. By the essentially constant pulse current is meant the current after the transient response. The pulse time and the pulse current are set on the basis of the composition of the protective atmosphere and the material and size of the electrode. The length of the arc is regulated by changing the pulse frequency, that is to say the reciprocal value of the sum of basic time and pulse time. According to the prerequisite, however, the pulse time is constant, for which reason the regulation of the arc length is simply brought about by a change in the basic time.

For regulation purposes, the arc voltage is sensed during every pulse time. Since rapid changes in the arc voltage can occur during the pulse time, which can for example be due to the characteristics of the current source, it is necessary to measure the arc voltage on a number of occasions during a pulse time. In this connection, the measurement can take place at individual times in order to be used for example in a digitally controlled regulation sequence or continuously during a given period of time in order to be used in a regulation sequence controlled by analog means. The arc voltage here means the voltage which is measurable between two points which are as close as possible to the foot of the electric arc on the workpiece and on the electrode. This voltage is usually measured between the one pole of the current source which is connected to the earth lead and the contact nozzle of the welding burner, in which nozzle the current is transferred to the electrode. The voltage measured therefore includes the voltage drop in the earth lead, the contact voltage drop and the voltage drop in the electrode between the contact nozzle and the electrode tip. These latter voltage drops are, however, small in comparison with the arc voltage itself and the abovementioned measurement can therefore be used as the basis for the determination of the length of the electric arc without the result being significantly influenced.

A change in the length of the electric arc leads to changed energy circumstances in the electric arc, since according to the prerequisite the pulse current is kept constant. The pinching force therefore remains unchanged but, as a result of the changed length of the electric arc, the movement pattern of the drop for example is influenced and the spatter tends to increase. The length of the electric arc or the corresponding voltage respectively must therefore be restored rapidly in order to achieve control over the effect of the pinching force.

In the case of an electric arc which is too long, the energy supply per unit of time must be decreased in order to reduce the fusion speed of the electrode in relation to its permanently set feed speed. This takes place by means of an extension of the basic time. The decreased energy supply per unit of time leads to a reduced fusion speed of the electrode, the free length of which outside the contact nozzle increases until the length of the electric arc has been restored to the predetermined nominal value. In the opposite case, that is to say when the fusion takes place too slowly, the free length of the electrode increases and the length of the electric arc decreases. The basic time must be shortened so that a greater quantity of energy per unit of time is supplied and the electrode is consumed slightly more rapidly than it is fed, until a correct length of the electric arc has been achieved.

According to a preferred embodiment of the invention, an nth mean value, which is used for the calculation of the basic time which follows the nth pulse, is calculated by addition of the (n-1)th mean value and of the pulse mean value of only those arc voltages measured during the nth pulse, the pulse mean value of the nth pulse and the (n-1)th mean value forming the nth mean value in stipulated proportions.

Thus for the calculation of the basic time, which is to apply after a pulse which has just been completed, not only the mean value which relates to the arc voltages measured during this pulse are used, but also the mean value which has been applied for the determination of the basic time immediately preceding this pulse. By this means, the mean value which is used for the calculation of the basic time is evened out to a certain extent, since the pulse mean value of an individual pulse can differ quite considerably from the pulse mean value of the preceding pulse. It has also proved to be advantageous that the nth mean value should consist of 20-90%, preferably 40-60%, of the pulse mean value of the nth pulse and the rest of (n-1)th mean value.

According to a preferred embodiment of the invention, the pulse time is at least 1 millisecond and the arc voltage is measured only during the second half of the pulse time. At the start of the pulse time, the rapid increase of the pulse current from the level of the basic current is accompanied by a transient response until the pulse current stabilizes at the set value. During the second half of the pulse time, the pulse current is stable even in the case of very short pulse times. The measurement of the arc voltage therefore takes place at a constant pulse current. It is also advantageous that the measurement of the arc voltage stops at least 100 microseconds before the end of the pulse time and that the basic time and the basic current, which are to apply immediately after the pulse, are calculated during the remaining pulse time.

According to the invention, it is advantageous that the basic current is a function of the calculated basic time and the nominal basic time and basic current. The basic current preferably satisfies the function

$$I_b = (I_{bn}.T_{bn})/T_b$$

It has become apparent that the energy which is needed during the basic time for the fusion of the correct quantity of material per electrode end corresponds to the product $I_b.T_b$, since the voltage which is also necessary for the calculation of the energy should essentially be constant. It is assumed that this voltage is dominated completely by the anode or cathode voltage drop of the electric arc at the electrode end, which during welding is close to constant.

The basic time is changed on the basis of the mean value, calculated according to the above, of the arc voltage during the pulse time. According to the invention, this is preferably carried out in that the basic time immediately following the pulse is calculated by addition of a basic time correction, which corresponds to the difference signal, to the nominal basic time.

According to the invention, it is advantageous to make the basic time correction proportional to the said voltage difference with a factor K. As mentioned above, the voltage difference is equal to the difference between the said mean value of the arc voltage which is designated with $U_a$ and the reference voltage $U_r$. The basic time is to increase when the voltage difference $(U_a-U_r)$ is positive and decrease when this difference is negative.

The pulse time and the pulse current are set depending only upon the composition of the protective atmosphere and the material and size of the electrode and are independent of the feed speed of the electrode. For the pulse frequency F it holds true that

$$F = w/k_1 = 1/(T_{bn} + T_p)$$

where w is the feed speed, $k_1$ a constant, $T_{bn}$ the nominal basic time and $T_p$ the pulse time. The length of the nominal basic time is corrected with a value $DT_b$

$$DT_b = K(U_a-U_r),$$

where K is the abovementioned factor. The changed basic time becomes

$$T_b = T_{bn} + DT_b$$

and assuming the abovementioned advantageous relationship

$$I_b.T_b = I_{bn}.T_{bn}$$

becomes

$$I_b = (T_{bn}.I_{bn})/(T_b + DT_b)$$

According to the invention, it is furthermore advantageous that the factor K represents a function of the feed speed as the relationship between the basic time correction $DT_b$ and the nominal basic time is kept constant and independent of the feed speed at a given value of the voltage difference. In the case of a low feed speed, the pulse frequency is low, and it follows from this that $T_{bn}$ is relatively great. In the case of a factor K which is independent of the feed speed, the basic time correction for a given voltage difference $(U_a-U_r)$ would, with

regard to Tbn, be relatively smaller than in the case of normal or higher speeds. As a result of the small change in $T_{bn}$, it would take a longer time to restore the correct arc length in the case of low feed speeds of the electrode. By means of making $DT_b/T_{bn}$ independent of the feed speed, this inconvenience is eliminated. The factor K is best changed according to the equation

$$K = A/w + B$$

where A and B are constants, which are determined by testing.

In the case of a low feed speed of the electrode, which in general is applied in welding with thicker electrode diameters, there is also the inconvenience that regulation of an electric arc which is too long, which is characterized by a positive voltage difference $(U_a-U_r)$, to the desired length takes a relatively long time, since it is determined by the feed speed of the electrode. According to a particular embodiment of the invention, the feed speed is therefore raised by at most 50%, when the voltage difference $(U_a-U_r)$ is positive and the feed speed is lower than a stipulated value. By means of the increase in the feed speed, the electric arc length is restored more rapidly to its correct value. The feed speed is preferably raised at most to the stipulated value.

The invention is explained in greater detail below in association with the attached drawing which shows an exemplary embodiment of the same.

Fig. 1 shows the characteristic parameters of the welding current.

Fig. 2 shows a basic circuit diagram for pulsed arc welding.

Fig. 3 shows a slightly more detailed connection diagram according to Fig. 2 with analog circuits.

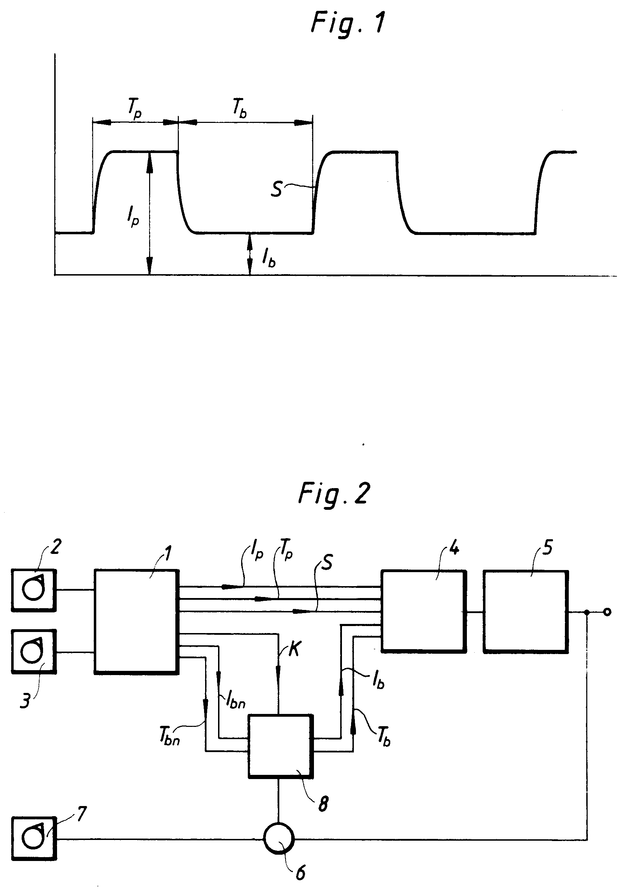

In Fig. 1, the slightly idealized sequence of the welding current in pulsed arc welding is shown. During the pulse time $T_p$, the welding current has a value $I_p$ and during the basic time $T_b$ a value $I_b$. During the pulse time, the current climbs very steeply at the start to its value $I_p$, which during the rest of the pulse time is essentially constant. usually the steep rise is followed by a transient response (not shown here) before the pulse current reaches its constant value. As a result of the characteristics of the welding current source, the constant current can also display smaller fluctuations. The measurements, referred to in the introduction, of the arc voltage during the pulse time are made only when the pulse current is constant. The rise time of the pulse is settable and measurements are started as early as possible after the rise time, preferably during the second half of the pulse time. The edge of the pulse is here designated with S.

In Fig. 2, a synergy unit 1 is shown with a first input for a signal which is settable by means of an adjustment device 2 and corresponds to certain selectable combinations of composition of the protective atmosphere and material and size of the electrode, and with a second input for a feed speed for the electrode which is settable by means of a second adjustment device 3. The relationship between these parameters and the values $I_p$, $T_p$, $I_{bm}$ $T_{bn}$ and S, which are characteristic for pulsed arc welding, in order to achieve a good welding result, is known and can be produced by means of testing, which must always be carried out for new parameter combinations. The steepness of the edge S of the pulse current influences the stability and noise level of the electric arc upon the increase in current from the basic value to the constant value of the pulse current. Very steep edges often give rise to inconvenient noise. With the aid of the signals from the adjustment device 2 and 3, constant values for the pulse current $I_p$ and the pulse time $T_p$, nominal values for the basic current $I_{bn}$ and the basic time $T_{bn}$ and a fixed edge S are selected in the synergy unit. In the case of a completely stationary welding sequence, a given arc voltage and arc length are thus obtained for the selected parameter combination.

The reference values of $I_p$, $T_p$ and S are transmitted directly to a pulse generator 4. The values of $I_{bn}$ and $T_{bn}$ are modified, however, according to the following description to $I_b$ and $T_b$, which are transmitted to the pulse generator 4. It should be noted that here $I_p$, $I_{bn}$, $T_p$, $T_{bn}$ and S are signals which correspond to given values of current, time and steepness of the edge.

In the pulse generator 4, on the basis of the incoming signals, a corresponding pulse train is generated, which represents the current reference value for the regulation of a current source 5. This gives out a welding current with the desired pulse sequence to a welding point (not shown here). The arc voltage is sensed and a corresponding signal is compared in a comparator 6 with a signal which is settable by means of a third adjustment device 7 and corresponds to a reference value of the arc voltage. The difference signal emanating from the comparator 6 as well as the two signals for $I_{bn}$ and $T_{bn}$ emanating from the synergy unit 1 are conveyed to an arc length regulator 8, in which the basic time $T_b$ and the basic current $I_b$ are adapted to the changed arc voltage according to the abovementioned relationship. There is therefore also conveyed from the synergy unit a signal which corresponds to the factor K and which is dependent upon the feed speed. The regulation is carried out on the assumption that

$$I_b.T_b = I_{bn}.T_{bn} = constant.$$

It can be seen from the schematic arrangement shown in Fig. 2 that the regulation of the arc length, which it is sought to achieve by means of this arrangement, can be realized either by means of connection circuits which function in an analog manner or by means of a processor which functions with a suitable program, since the mathematical relationships between the different quantities involved can be realized by means of a system which functions in an analog manner or by means of a suitable program.

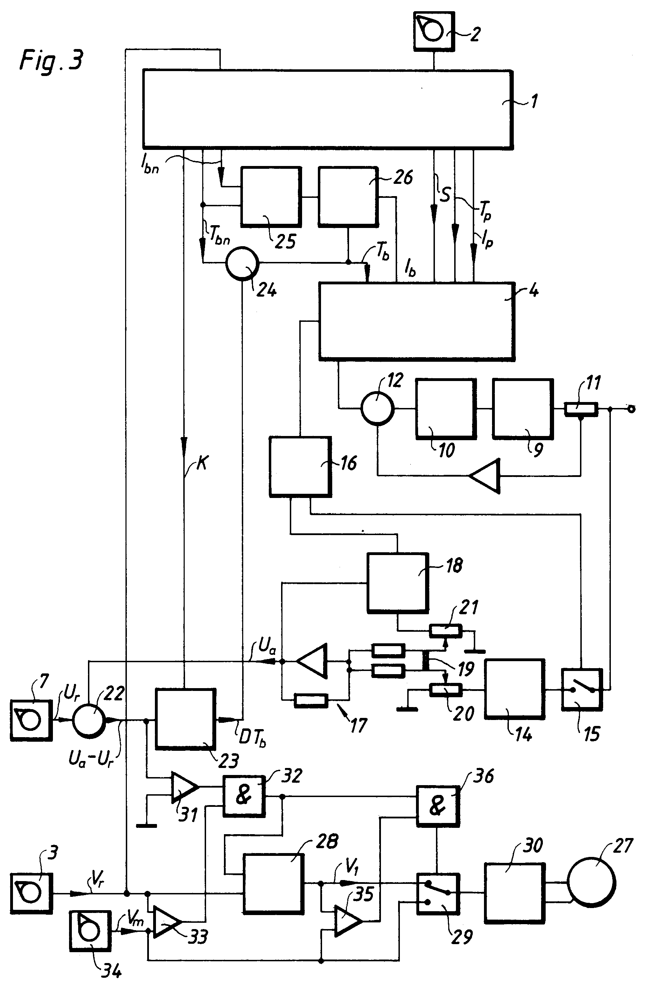

Fig. 3 shows a pulsed arc welding current source with a system which functions in an analog manner The synergy unit 1 and the pulse generator 4 are again shown as blocks, while the remaining units in Fig. 2 are shown in greater detail. The pulsed arc welding current source has also been supplemented with further circuits.

A current source 9 is controlled by a current regulator 10. The actual value of the welding current is sensed in a shunt 11 and a signal corresponding to the current is returned to a summation circuit 12, in which the returned signal is compared with the reference variable given out from the pulse generator 4, which variable is a signal corresponding to the predetermined reference value of the welding current. The error signal is conveyed to the current regulator 10 of the current source.

As a result of the high regulation speed which is necessary here, the current source must have a response time which should be lower than 1 millisecond.

The arc voltage is conveyed to an integrating circuit 14 when a contactor 15 is connected. The connection of the contactor is controlled by a pulsing device 16 and takes place during a given time of the pulse time, preferably during the second half of the pulse time. During this time, in the circuit 14, a mean value of the arc voltage is calculated. This mean value is added in a summation circuit 17 to a mean value given out from a holding circuit 18. The resultant mean value, which is available at the output of the summation circuit 17, is returned to the holding circuit 18 and is given out again to the summation circuit 17 upon the calculation of the resultant mean value of the next pulse. The resultant mean value $U_a$ in connection with the nth pulse consists of the mean value, which is determined in the circuit 14, of the arc voltages which are measured during a given time of the nth pulse and of the resultant mean value, from the preceding pulse, which is available at the end of the (n-1)th pulse and has been stored in the holding circuit 18 and given out from this circuit at the correct moment by means of a control signal from the pulsing device 16. Given proportions of the signals from circuit 14 and the holding circuit 18 are tapped from two potentiometers 20, 21 which are mechanically push-pull connected to ground by an arm 19 and are summarized by circuit 17, so that the resultant mean value consists to 20-90% of the mean value of the nth pulse from the circuit 14 and the balance of the mean value of the (n-1)th pulse from the holding circuit 18. Very good results are obtained in the case of a composition with 50% of each of the mean value of the (n-1)th and the mean value of the nth pulse from the circuit 14.

The resultant mean value $U_a$ is added in a summation circuit 22, in consideration of the preceding sign, to the reference value $U_r$ of the arc voltage from the adjustment device 7 in order to form the difference $(U_a-U_r)$. The reference value $U_r$ of the arc voltage is thus compared with a selected mean value of arc voltages which are measured continuously or at separate times. Rapid and excessively sudden changes in the arc voltage are evened out over a longer period of time as a result of the abovementioned mean value calculation.

In the system shown here, which functions in an analog manner, a continuous measurement of the arc voltage during a shorter period of the pulse time is preferred. In a digitally functioning system, the arc voltage is measured on a number of separate occasions during the pulse time.

The difference signal is conveyed to an arc length regulator 23 which at its output gives out a signal which corresponds to a basic time correction $DT_b$ which can be positive or negative. The basic time correction is calculated according to the above as

$$DT_b = K(U_a-U_r)$$

where K is a factor dependent upon the feed speed of the electrode. A signal corresponding to K is transmitted from the synergy unit 1 to the arc length regulator 23. This has above all a P action. In view of the regulating accuracy, this should, however, be executed with a PI action, by means of which the integrating part also is made influencable by the factor K. $DT_b$ is added to $T_{bn}$ in a summation circuit 24 and is conveyed to the pulse generator 4 as control signal $T_b$.

According to the above it holds true that

$$T_b.I_b = T_{bn}.I_{bn} = \text{constant.}$$

In a multiplier 25, the product $T_{bn}.I_{bn}$ is therefore first formed, which is subsenquently divided in a further unit 26 by $T_b$ in order to obtain $I_b$ which likewise represents a control signal for the pulse generator 4.

As mentioned above, it is advantageous, in the case of a low feed speed of the electrode, to briefly increase it for a more rapid regulation of an electric arc which is too long, which is characterized by a positive value of $(U_a-U_r)$. In the case of stationary operation, the speed of a feed motor 27 is determined by a speed reference value $v_r$ from the adjustment device 3. The reference value passes unchanged a non-activated multiplier 28 and is guided via a change-over switch 29 to a regulating unit 30 for the motor. When the difference between the resultant mean value $U_a$ of the arc voltage and the reference value $U_r$ is Positive, which is ascertained in a comparator 31, the comparator gives out a "1" to an AND circuit 32.

In a second comparator 33, the reference value $v_r$ of the speed is compared with a value for a given speed $v_m$ which is permanently set by means of an adjustment device 34. When the reference value $v_r$ is lower than the set speed $v_m$, the comparator 33 gives out a "1" to the AND circuit 32, which where appropriate gives out a "1" to the multiplier 28. This is activated and raises the incoming reference value $v_r$ by a fixed factor a, which is at most 1.5, for $v_1 = av_r$. The motor 27 is accelerated and the electric arc which is too long is rapidly regulated even at low feed speeds. It is, however, not desirable that this speed $v_1$, which has been raised by means of the multiplier 28, becomes greater than the speed $v_m$ which is given by means of the adjustment device 34. The reference value $v_1$, which is given out from the multiplier 28, is therefore compared in a comparator 35 with the value for the stipulated speed $v_m$. In the case of a positive $(v_1-v_m)$, the comparator gives out a "1" to an AND circuit 36, which also receives a logic signal from the AND circuit 32. If $(U_a-U_r)$ and $(v_m-v_r)$ are positive, the AND circuit 32 gives out a "1", the multiplier 28 is activated and $v_1 = av_r$. If $(v_1-v_m)$ is also positive, the comparator 35 gives out a "1" and the AND circuit 36 gives out a "1" to the change-over switch unit 29 which is activated. The change-over switch connects the reference value $v_m$ to the regulating unit 30. During the regulation of the electric arc which is too long, the feed speed is therefore increased, if it is less than $v_m$, to a maximum of $v_m$.

## Claims

1. Method for pulsed arc welding with an electrode which is continuously fed at a given feed speed to a welding point, in which there are caused to flow alternately a basic current during a basic time and a pulse current during a pulse time, nominal values of the basic time $(T_{bn})$, the basic current $(I_{bn})$, the pulse time $(T_p)$ and the pulse current $(I_p)$ being selected according to a predetermined relationship upon the composition of the protective atmosphere and the material and size of the electrode as well as the basic time and the basic current additionally depending upon the feed speed of the electrode, wherein the arc voltage is measured during the pulse time and is compared with a stipulated reference voltage $(U_r)$ corresponding to a given length of electric arc, a voltage difference between the arc voltage and the reference voltage is formed and wherein the basic time $(T_b)$ is calculated so that the basic time $(T_b)$ is extended in the case of a positive value of the voltage difference or respectively shortened in the case of a negative value of the said voltage difference the basic current being reduced in the case of an extension of the basic time $(T_b)$ so that the quantity of material fused per unit of time at the end of the electrode during the extended basic time is smaller than the quantity of electrode fed per unit of time and the basic current being increased in the case of shortening of the basic time so that the quantity of material fused per unit of time at the end of the electrode during the shortened basic time is greater than the quantity of electrode fed per unit of time, characterized in that the welding material is transferred from the electrode to the welding point in one single non-short-circuiting drop per pulse, in that the pulse time $(T_p)$ and the pulse current $(I_p)$ are kept essentially constant and the arc voltage is measured during the pulse time on a number of occasions when the pulse current is essentially constant and that from measured values a mean value $(U_a)$ of the arc voltage is calculated and the voltage difference $(U_a-U_r)$ is formed between the said mean value $(U_a)$ and the reference voltage $(U_r)$, whereupon the basic time and the basic current, which applied immediately before the pulse are changed to the calculated values to apply immediately after the pulse.

2. Method for pulsed arc welding according to Claim 1, characterized in that the pulse time is at least 1 millisecond and the arc voltage is measured only during the second half of the pulse time.

3. Method for pulsed arc welding according to Claim 1 or 2, characterized in that the measurement of the arc voltage stops at least 100 microseconds before the end of the pulse time and the basic time and the basic current, which are to apply immediately after the pulse, are calculated during the remaining pulse time.

4. Method for pulsed arc welding according to any of Claims 1 to 3, characterized in that an nth mean value, which is used for the calculation of the basic time which follows an nth pulse, is calculated by addition of the (n-1)th mean value and the pulse mean value of only those arc voltages measured during the nth pulse, the pulse mean value of the nth pulse and the (n-1)th mean value forming the nth mean value in stipulated proportions.

5. Method for pulsed arc welding according to Claim 4, characterized in that the nth mean value consists to 20-90%, preferably 40-60%, of the pulse mean value of the nth pulse and the rest of the (n-1)th mean value.

6. Method for pulsed arc welding according to any of Claims 1 to 5, characterized in that the basic current ($I_b$) is a function of the basic time ($T_b$) and the nominal basic time ($T_{bn}$) and the basic current ($I_{bn}$).

7. Method for pulsed arc welding according to Claim 6, characterized in that the basic current ($I_b$) satisfies the equation

$$I_b = (I_{bn}.T_{bn})/T_b$$

8. Method for pulsed arc welding according to any of Claims 1 to 7, characterized in that the basic time immediately following the pulse is calculated by addition of a basic time correction ($DT_b$), which corresponds to the voltage difference ($U_a-U_r$), to the nominal basic time.

9. Method for pulsed arc welding according to Claim 8, characterized in that the basic time correction ($DT_b$) is proportional to the voltage difference ($U_a-U_r$) with a factor K.

10. Method for pulsed arc welding according to Claim 9, characterized in that the factor K represents a function of the feed speed, so that the relationship between the basic time correction ($DT_b$) and the nominal basic time ($T_{bn}$) is kept constant at a given value of the voltage difference ($U_a-U_r$) independent of the feed speed.

11. Method for pulsed arc welding according to Claim 9 or 10, characterized in that the feed speed is raised by at most 50%, when the voltage difference ($U_a-U_r$) is positive and the feed speed is lower than a stipulated value.

12. Method for pulsed arc welding according to Claim 11, characterized in that the feed speed is raised at most to the stipulated value.

**Patentansprüche**

1. Verfahren zum Impulslichtbogenschweißen mit einer Elektrode, die kontinuierlich mit einer gegebenen Vorschubgeschwindigkeit einer Schweißstelle zugeführt wird, bei dem wechselweise das Fließen eines Grundstromes während einer Grundzeit und eines Impulsstromes während einer Impulszeit bewirkt wird, wobei Nennwerte der Grundzeit ($T_{bn}$), des Grundstromes ($I_{bn}$), der Impulszeit ($T_p$) und des Impulsstromes ($I_p$) nach einem vorbestimmten Verhältnis aufgrund der Zusammensetzung der Schutzatmosphäre und des Materials und der Größe der Elektrode ausgewählt werden und die Grundzeit und der Grundstrom zusätzlich auch von der Vorschubgeschwindigkeit der Elektrode abhängig sind, wobei die Lichtbogenspannung während der Impulszeit gemessen wird und mit einer vorgegebenen Bezugsspannung ($U_r$) verglichen wird, die einer gegebenen Länge des elektrischen Lichtbogens entspricht, eine Spannungsdifferenz zwischen der Lichtbogenspannung und der Bezugsspannung gebildet wird und wobei die Grundzeit ($T_b$) so berechnet wird, daß im Fall eines positiven Wertes der Spannungsdifferenz die Grundzeit ($T_b$) verlängert beziehungsweise im Falle eines negativen Wertes der besagten Spannungsdifferenz jeweils verkürzt wird, wobei der Grundstrom im Fall einer Verlängerung der Grundzeit ($T_b$) verringert wird, so daß die pro Zeiteinheit am Ende der Elektrode während der verlängerten Grundzeit geschmolzene Materialmenge geringer als die pro Zeiteinheit zugeführte Elektrodenmenge ist und der Grundstrom im Fall der Verkürzung der Grundzeit erhöht wird, so daß die pro Zeiteinheit am Ende der Elektrode während der verkürzten Grundzeit geschmolzenen Materialmenge größer als die pro Zeiteinheit zugeführte Elektrodenmenge ist, dadurch gekennzeichnet, daß das Schweißmaterial in einem einzigen nicht kurzschließenden Tropfen pro Impuls von der Elektrode zur Schweißstelle übertragen wird, daß die Impulszeit ($T_p$) und der Impulsstrom ($I_p$) im wesentlichen konstant gehalten werden und die Lichtbogenspannung während der Impulszeit bei mehreren Gelegenheiten gemessen wird, wenn der Impulsstrom im wesentlichen konstant ist und daß von den Meßwerten ein Mittelwert ($U_a$) der Lichtbogenspannung berechnet wird und die Spannungsdifferenz ($U_a-U_r$) zwischen dem besagten Mittelwert ($U_a$) und der Bezugsspannung ($U_r$) gebildet wird, wonach die unmittelbar vor dem Impuls geltende Grundzeit und der Grundstrom auf die berechneten Werte umgeändert werden, um unmittelbar nach dem Impuls zu gelten.

**2.** Verfahren zum Impulslichtbogenschweißen nach Anspruch 1, dadurch gekennzeichnet, daß die Impulszeit mindestens eine Millisekunde beträgt und die Lichtbogenspannung nur während der zweiten Hälfte der Impulszeit gemessen wird.

**3.** Verfahren zum Impulslichtbogenschweißen nach Anspruch 1 oder 2, dadurch gekennzeichnet, daß die Messung der Lichtbogenspannung mindestens 100 Mikrosekunden vor dem Ende der Impulszeit beendet wird und die Grundzeit und der Grundstrom, die unmittelbar nach dem Impuls gelten sollen, während der verbleibenden Impulszeit berechnet werden.

**4.** Verfahren zum Impulslichtbogenschweißen nach einem der Ansprüche 1 bis 3, dadurch gekennzeichnet, daß ein n-ter Mittelwert, der für die Berechnung der einem n-ten Impuls folgenden Grundzeit benutzt wird, durch Addition des (n-1)-ten Mittelwertes und des Impulsmittelwertes von nur den während des n-ten Impulses gemessenen Lichtbogenspannungen berechnet wird, wobei der Impulsmittelwert des n-ten Impulses und der (n-1)-te Mittelwert den n-ten Mittelwert in vorgegebenen Anteilen bilden.

**5.** Verfahren zum Impulslichtbogenschweißen nach Anspruch 4, dadurch gekennzeichnet, daß der n-te Mittelwert zu 20-90%, vorzugsweise 40-60%, aus dem Impulsmittelwert des n-ten Impulses und der Rest aus dem (n-1)-ten Mittelwert besteht.

**6.** Verfahren zum Impulslichtbogenschweißen nach einem der Ansprüche 1 bis 5, dadurch gekennzeichnet, daß der Grundstrom ($I_b$) eine Funktion der Grundzeit ($T_b$) und der Nenngrundzeit ($T_{bn}$) und des Grundstromes ($I_{bn}$) ist.

**7.** Verfahren zum Impulslichtbogenschweißen nach Anspruch 6, dadurch gekennzeichnet, daß der Grundstrom ($I_b$) der Gleichung

$$I_b = (I_{bn} \cdot T_{bn})/T_b$$

genügt.

**8.** Verfahren zum Impulslichtbogenschweißen nach einem der Ansprüche 1 bis 7, dadurch gekennzeichnet, daß die dem Impuls unmittelbar folgende Grundzeit durch Addition einer der Spannungsdifferenz ($U_a$-$U_r$) entsprechenden Grundzeitkorrektur ($DT_b$) zur Nenngrundzeit berechnet wird.

**9.** Verfahren zum Impulslichtbogenschweißen nach Anspruch 8, dadurch gekennzeichnet, daß die Grundzeitkorrektur ($DT_b$) mit einem Faktor K proportional zur Spannungsdifferenz ($U_a$-$U_r$) ist.

**10.** Verfahren zum Impulslichtbogenschweißen nach Anspruch 9, dadurch gekennzeichnet, daß der Faktor K eine Funktion der Vorschubgeschwindigkeit darstellt, so daß das Verhältnis zwischen der Grundzeitkorrektur ($DT_b$) und der Nenngrundzeit ($T_{bn}$) unabhängig von der Vorschubgeschwindigkeit auf einem gegebenen Wert der Spannungsdifferenz ($U_a$-$U_r$) konstant gehalten wird.

**11.** Verfahren zum Impulslichtbogenschweißen nach Anspruch 9 oder 10, dadurch gekennzeichnet, daß die Vorschubgeschwindigkeit um höchstens 50% erhöht wird, wenn die Spannungsdifferenz ($U_a$-$U_r$) positiv ist und die Vorschubgeschwindigkeit unter einem vorgegebenen Wert liegt.

**12.** Verfahren zum Impulslichtbogenschweißen nach Anspruch 11, dadurch gekennzeichnet, daß die Vorschubgeschwindigkeit höchstens zum vorgegebenen Wert erhöht wird.

**Revendications**

**1.** Procédé de soudage à l'arc pulsé avec une électrode qui est avancée en continu à une vitesse d'avancement donnée jusqu'à un point de soudage, dans laquelle il est fait en sorte qu'un courant de base durant un temps de base et un courant d'impulsion durant un temps d'impulsion circulent alternativement, les valeurs nominales du temps de base ($T_{bn}$), du courant de base ($I_{bn}$), du temps d'impulsion ($T_p$) et du courant d'impulsion ($I_p$) étant sélectionnées conformément à une relation prédéterminée d'après la composition de l'atmosphère protectrice et de la matière et de la taille de l'électrode, le temps de base et le courant de base dépendant aussi en plus de la vitesse d'avancement de l'électrode, dans lequel la tension d'arc est mesurée durant le temps d'impulsion et comparée à une tension de référence stipulée ($U_r$) correspondant à une longueur donnée d'arc électrique, une différence de tension entre la tension d'arc et la tension de référence est formée et dans lequel le temps de base ($T_b$) est calculé de telle sorte que le temps de base ($T_b$) soit augmenté dans le cas d'une valeur positive de la différence de tension ou respectivement réduit dans le cas d'une valeur négative de ladite différence de tension le courant de base étant réduit dans le cas d'une augmentation du temps de base ($T_b$) de telle sorte que la quantité de matière fondue par unité de temps à la fin de l'électrode durant le temps de base prolongé soit inférieure à la quantité d'électrode avancée par unité de temps et le courant de base étant augmenté dans le cas d'une réduction du temps de base de telle sorte que la quantité de matière fondue par unité de temps à l'extrémité de l'électrode durant le temps de base réduit soit supérieure à la quantité d'électrode avancée par unité de temps, caractérisé en ce que la matière d'apport est transférée de l'électrode au point de soudage en un seul dépôt par impulsion non générateur de court-circuit, en ce que le temps d'impulsion ($T_p$) et le courant d'impulsion ($I_p$) sont maintenus essentiellement constants et la tension d'arc est mesurée durant le temps d'impulsion un nombre de fois où le courant d'impulsion est essentiellement constant et en ce que à partir de valeurs mesurées une valeur moyenne ($U_a$) de la tension d'arc est calculée et la différence de tension ($U_a - U_r$) est formée entre ladite valeur moyenne ($U_a$) et la tension de référence ($U_r$), après quoi le temps de base et le courant de base, qui s'appliquaient immédiatement avant l'impulsion sont remplacés par les valeurs calculées devant s'appliquer immédiatement après l'impulsion.

2. Procédé de soudage à l'arc pulsé selon la revendication 1, caractérisé en ce que le temps d'impulsion est au moins 1 milliseconde et la tension d'arc est mesurée uniquement durant la seconde moitié du temps d'impulsion.

3. Procédé de soudage à l'arc pulsé selon la revendication 1 ou 2, caractérisé en ce que la mesure de la tension d'arc cesse au moins 100 microsecondes avant la fin du temps d'impulsion et le temps de base et le courant de base, qui doivent s'appliquer immédiatement après l'impulsion, sont calculés durant le reste du temps d'impulsion.

4. Procédé de soudage à l'arc pulsé selon l'une quelconque des revendications 1 à 3, caractérisé en ce qu'une n-ième valeur moyenne, qui est utilisée pour le calcul du temps de base qui suit une n-ième impulsion, est calculée par l'addition de la (n-1)-ième valeur moyenne et la valeur moyenne d'impulsion des tensions d'arc mesurées durant la n-ième impulsion seulement, la valeur moyenne d'impulsion de la n-ième impulsion et la (n-1)-ième valeur moyenne formant la n-ième valeur moyenne dans des proportions stipulées.

5. Procédé de soudage à l'arc pulsé selon la revendication 4, caractérisé en ce que la n-ième valeur moyenne consiste en 20-90%, de préférence 40-60%, de la valeur moyenne d'impulsion de la n-ième impulsion et le reste de la (n-1)-ième valeur moyenne.

6. Procédé de soudage à l'arc pulsé selon l'une quelconque des revendications 1 à 5, caractérisé en ce que le courant de base ($I_b$) est une fonction du temps de base ($T_b$) et du temps de base nominal ($T_{bn}$) et du courant de base ($I_{bn}$).

7. Procédé de soudage à l'arc pulsé selon la revendication 6, caractérisé en ce que le courant de base ($I_b$) satisfait à l'équation

$$I_b = (I_{bn}.T_{bn})/T_b$$

8. Procédé de soudage à l'arc pulsé selon l'une quelconque des revendications 1 à 7, caractérisé en ce que le temps de base suivant immédiatement l'impulsion est calculé par l'addition d'une correction de temps de base ($DT_b$), qui correspond à la différence de tension ($U_a - U_r$), au temps de base nominal.

9. Procédé de soudage à l'arc pulsé selon la revendication 8, caractérisé en ce que la correction de temps de base ($DT_b$) est proportionnelle à la différence de tension ($U_a - U_r$) avec un facteur K.

10. Procédé de soudage à l'arc pulsé selon la revendication 9, caractérisé en ce que le facteur K représente une fonction de la vitesse d'avancement, de telle sorte que la relation entre la correction de temps de base ($DT_b$) et le temps de base nominal ($T_{bn}$) est maintenue constante à une valeur donnée de la différence de tension ($U_a - U_r$) indépendamment de la vitesse d'avancement.

11. Procédé de soudage à l'arc pulsé selon la revendication 9 ou 10, caractérisé en ce que la vitesse d'avancement est augmentée par au plus 50%, quand la différence de tension ($U_a - U_r$) est positive et la vitesse d'avancement est inférieure à une valeur stipulée.

12. Procédé de soudage à l'arc pulsé selon la revendication 11, caractérisé en ce que la vitesse d'avancement est augmentée au plus à

la valeur stipulée.

## Fig. 1

## Fig. 2

Fig.3